# EUROPÄISCHE PATENTSCHRIFT

(11) **EP 2 159 602 B1**
(45) Veröffentlichungstag und Bekanntmachung des Hinweises auf die Patenterteilung: **28.08.2013**
(21) Anmeldenummer: 08015215.0
(22) Anmeldetag: 28.08.2008
(51) Int. Cl.: G01S 17/02, G08B 13/184, G02B 26/12, G01S 17/10, G01S 17/42

(54) **Überwachung eines Raumes**
Monitoring of an area
Surveillance d'une pièce

(43) Veröffentlichungstag der Anmeldung: 03.03.2010
(73) Patentinhaber: SICK AG, 79183 Waldkirch (DE)
(72) Erfinder: Lages, Ulrich, Dr., 21031 Hamburg (DE)
(74) Vertreter: Manitz, Finsterwald & Partner GbR

(56) Entgegenhaltungen:
- DE-A1- 4 142 702
- DE-A1- 19 757 848
- GB-A- 2 174 194
- US-A1- 2008 151 264

## Beschreibung

Die Erfindung betrifft die Verwendung einer Vorrichtung zur Überwachung eines Übergabe- oder Schleusenraumes, wobei die Vorrichtung eine Einrichtung zur Entfernungsmessung durch Bestimmen der Laufzeit von elektromagnetischer Strahlung umfasst.

Ferner betrifft die Erfindung ein Verfahren zur Überwachung eines Raumes mittels einer derartigen Vorrichtung. Schließlich betrifft die Erfindung eine derartige Raumüberwachungsvorrichtung.

Bei der Einrichtung zur Entfernungsmessung handelt es sich insbesondere um einen Laserscanner.

Generell ist die Überwachung von Räumen oder Zugangsbereichen zu Räumen mittels eines oder mehrerer Laserscanner bekannt. Einrichtungen zur Entfernungsmessung der hier in Rede stehenden Art, insbesondere Laserscanner, senden die Strahlung in wenigstens einer Ebene aus, und zwar innerhalb der Ebene zeitlich nacheinander in unterschiedliche Winkelrichtungen. Dies wird beispielsweise dadurch erreicht, dass einer feststehenden Sendeeinrichtung, z.B. einer Laserdiode, ein während des Überwachungsbetriebs rotierender Drehspiegel zugeordnet ist. Der Sichtbereich eines derartigen Entfernungsmessers kann bis zu 360° betragen, wobei je nach Anwendung auch kleinere Sichtbereiche vorgesehen sein können. Effektive Sichtbereiche von weniger als 360° können auch dadurch realisiert werden, dass eine Auswertung der reflektierten Strahlung nur innerhalb eines entsprechend begrenzten Winkelbereiches erfolgt.

Entfernungsmesser, welche die Strahlung innerhalb einer Ebene aussenden, können z.B. Zugänge zu Maschinen oder Räumen überwachen. Eine lückenlose Überwachung eines räumlichen Bereiches ist allerdings nicht möglich. Hierzu muss zusätzlich zu der Aussendung der Strahlung innerhalb der Ebene gewissermaßen die Ebene selbst bewegt werden, um auf diese Weise insgesamt einen räumlichen Bereich überwachen zu können. Zu diesem Zweck ist es beispielsweise bekannt, den gesamten Entfernungsmesser in geeigneter Weise zu bewegen, beispielsweise zu verschwenken, um die Orientierung der Ebene, innerhalb welcher die Strahlung ausgesendet wird, innerhalb des jeweils zu überwachenden räumlichen Bereiches kontinuierlich zu ändern und so den gesamten räumlichen Bereich zu überwachen. Eine solche Vorgehensweise ist allerdings mit einem erheblichen konstruktiven und steuerungstechnischen Aufwand verbunden und hat für viele Anwendungen nicht akzeptierbare Kosten zur Folge.

Eine Anwendung, bei der einerseits eine lückenlose Überwachung eines räumlichen Bereiches zwingend erforderlich ist und gleichzeitig ein minimaler konstruktiver und steuerungstechnischer Aufwand sowie möglichst geringe Kosten gefordert werden, ist die Überwachung von so genannten Übergabe- oder Schleusenräumen, die insbesondere in Geldinstituten oder ähnlichen Einrichtungen vorgesehen sind. Derartige Übergabe- oder Schleusenräume dienen insbesondere dazu, Gegenstände, z.B. Geldkoffer, über eine Einbringseite in den Raum einzubringen und über eine Entnahmeseite aus dem Raum zu entnehmen. Hierbei muss insbesondere ausgeschlossen werden können, dass eine Person, die z.B. einen Geldkoffer in den Schleusenraum einbringt, zusammen mit dem Geldkoffer im Raum verbleibt und anschließend diejenige Person, die den Geldkoffer über die Entnahmeseite entnehmen möchte, überwältigt und sich somit Zugang zu dem betreffenden Geldinstitut verschafft. Es muss also sichergestellt werden, dass vor dem Öffnen der Entnahmeseite der Raum mit Ausnahme des Geldkoffers am Boden, allgemein also mit Ausnahme von zugelassenen Gegenständen, die sich insbesondere an zugelassenen Positionen innerhalb des Raumes befinden, leer ist.

Komplexe Überwachungssysteme werden für derartige Anwendungen bereits aufgrund der hohen Installations- und Betriebskosten nicht akzeptiert. Komplizierte Überwachungssysteme sind darüber hinaus anfälliger für Funktionsstörungen und Manipulationen.

Aus DE 197 57 848 A1 ist eine Vorrichtung zur optischen Erfassung von Objekten bekannt, die sich unter anderem dadurch auszeichnet, dass Planspiegel jeweils zu einem umlaufenden Strahl so ausgerichtet sind, dass sie den Strahl in mehreren Schwenkebenen mit nicht paralleler Abtastrichtung reflektieren.

DE 41 42 702 A1 beschreibt eine Einrichtung zum Abtasten dreidimensionaler Objekte.

Zum Stand der Technik wird außerdem auf US 2008/0151264 A1, die eine Vorrichtung zur Bestimmung von dreidimensionalen Profilen betrifft, sowie auf GB 2 174 194 A verwiesen, die eine Überwachung von Räumen beschreibt, insbesondere im Rahmen eines Sicherheitssystems.

Aufgabe der Erfindung ist es, eine Möglichkeit zur Überwachung von Räumen, insbesondere von Übergabe- und Schleusenräumen in Geldinstituten, zu schaffen, die bei minimalem konstruktiven und steuerungstechnischen Aufwand eine hinreichend lückenlose Raumüberwachung gestattet.

Die Lösung dieser Aufgabe erfolgt gemäß Anspruch 1 durch die Verwendung einer Vorrichtung der eingangs genannten Art, also mit einer Einrichtung zur Entfernungsmessung durch Bestimmen der Laufzeit von elektromagnetischer Strahlung, wobei die Vorrichtung dazu ausgebildet ist, die Strahlung in wenigstens zwei Ebenen auszusenden, von denen eine erste Ebene eine, insbesondere im Raum feststehende, Schutzebene und eine zweite Ebene eine abtastende Überwachungsebene ist, die sich während des Überwachungsbetriebs relativ zur Schutzebene durch den Raum bewegt.

Eine derartige Vorrichtung lässt sich mit denkbar geringem konstruktiven und steuerungstechnischen Aufwand realisieren, wie nachstehend näher angegeben wird. Insbesondere können mit lediglich einem einzigen Laserscanner, der selbst nicht durch den Raum bewegt zu werden braucht, sondern stationär angeordnet werden kann, die beiden Ebenen erzeugt werden.

Dementsprechend wird bei der erfindungsgemäßen Verwendung vorzugsweise genau ein im Raum angeordneter Laserscanner verwendet, der die Schutzebene und die Überwachungsebene mittels genau eines Senders, einer bewegbaren, wenigstens zwei Flächen zur Ablenkung der vom Sender ausgesandten Strahlung aufweisenden Ablenkeinheit, und zumindest einer im Raum angeordneten Ablenkeinrichtung erzeugt, wobei - jeweils bezogen auf die Abmessungen des Raumes - der Sender und die Ablenkeinheit nahe beieinander, insbesondere in einem gemeinsamen Gehäuse, und die Ablenkeinrichtung räumlich von dem Sender und der Ablenkeinheit getrennt angeordnet sind, insbesondere an oder in der Nähe von einander gegenüberliegenden Seiten, bevorzugt Schmalseiten, des Raumes.

Während hierbei die nahe am Sender angeordnete Ablenkeinheit, beispielsweise ein Drehspiegel mit zwei zueinander geneigt angeordneten Reflexionsflächen, jeweils für die Aussendung der Strahlung innerhalb der Ebenen in den unterschiedlichen Winkelrichtungen sorgt, erfolgt die Bewegung der einen Ebene, die hier als Überwachungsebene bezeichnet wird, durch den Raum mittels der von dem Sender und der Ablenkeinheit räumlich getrennt angeordneten Ablenkeinrichtung, die zusammen mit dem Laserscanner im Raum angeordnet ist.

Die erfindungsgemäße Raumüberwachung kann auf besonders einfache und kostengünstige Weise dann durchgeführt werden, wenn die Abmessungen des Raumes und die Anbauposition der Vorrichtung im Raum bekannt sind und bei der Auswertung der von der Vorrichtung während des Überwachungsbetriebs ermittelten Entfernungswerte berücksichtigt werden. Es kann dann nämlich der Umstand ausgenutzt werden, dass sich für jede Orientierung der Überwachungsebene im Raum ein eindeutiges, in dieser Ebene gemessenes Entfernungsbild ergibt. Aufgrund dieser geometrischen Eindeutigkeit kann der Entfernungsmesser aus den in einer eine jeweilige Orientierung aufweisenden Ebene gemessenen Entfernungsdaten auf die Orientierung der betreffenden Ebene im Raum schließen und so insgesamt ein dreidimensionales Abbild des Raumes erstellen. Der Entfernungsmesser kann somit aus den innerhalb einer Ebene gemessenen Entfernungswerten auf die Stellung der im Raum angeordneten Ablenkeinrichtung, beispielsweise eines Drehspiegels, schließen, die durch ihre Stellung die Orientierung der betreffenden Ebene im Raum bestimmt. Eine Kommunikation zwischen Entfernungsmesser und Ablenkeinrichtung, die beispielsweise dazu dient, dem Entfernungsmesser die jeweilige Drehstellung eines als Ablenkeinrichtung dienenden Drehspiegels zu übermitteln, ist folglich erfindungsgemäß nicht zwingend erforderlich. Gleichwohl kann eine derartige Kommunikation erfindungsgemäß erfolgen, um die Orientierung der jeweiligen Ebene im Raum dem Entfernungsmesser mitzuteilen, der dann ein Abbild des Raumes aus den Entfernungswerten vieler Ebenen und den über die Ablenkeinrichtung gelieferten Orientierungen dieser Ebenen im Raum berechnet. Eine derartige Ausgestaltung bietet sich insbesondere dann an, wenn der zu überwachende Raum relativ komplizierte Abmessungen aufweist.

Für Übergabe- oder Schleusenräume, wie sie beispielsweise in Geldinstituten derzeit vorhanden sind, ist eine derartige zusätzliche Kommunikation zwischen Ablenkeinrichtung und Entfernungsmesser allerdings in der Regel nicht erforderlich, da diese Räume meist eine einfache geometrische Form aufweisen, nämlich quaderförmig ausgebildet sind.

In beiden oben diskutierten Fallgestaltungen definiert die Geometrie des Raumes einen Sollzustand, dessen Vorhandensein mittels des Entfernungsmessers überwacht wird. Abweichungen von diesem Sollzustand haben dann eine Maßnahme, insbesondere einen Alarm, zur Folge. In den Sollzustand, also in die Geometrie des Raumes, können zugelassene Gegenstände in entweder konkret vorgegebenen oder grundsätzlich beliebigen Positionen innerhalb des Raumes mit einbezogen sein. Beispielsweise kann der Sollzustand einen am Boden des Raumes befindlichen Geldkoffer mit bekannten Abmessungen umfassen. Auch die Komponenten der Vorrichtung selbst können selbst zugelassene Gegenstände bilden. Ein entsprechender Sollzustand kann dem Entfernungsmesser bzw. einer dem Entfernungsmesser zugeordneten Auswerteeinrichtung in geeigneter Weise, z.B. durch Einlernen oder Programmieren, mitgeteilt werden.

Eine Besonderheit der Erfindung ist nun nicht nur die Bewegung einer Überwachungsebene durch den Raum hindurch, sondern zusätzlich das Vorsehen einer weiteren Ebene, die hier als Schutzebene bezeichnet wird und insbesondere während des Überwachungsbetriebs innerhalb des Raumes feststeht. Eine solche Schutzebene wird erfindungsgemäß nämlich derart innerhalb des Raumes ausgerichtet, dass alle relevanten Komponenten der Überwachungsvorrichtung vor Manipulationen geschützt sind. Beispielsweise kann bei Anordnung des Entfernungsmessers und der zur Erzeugung der Überwachungsebene dienenden Ablenkeinrichtung unterhalb der Decke des Raumes die Schutzebene derart positioniert werden, dass sie nach Art einer "abgehängten Decke" unterhalb des Entfernungsmessers und der Ablenkeinrichtung verläuft, so dass während des Überwachungsbetriebs der Entfernungsmesser und die Ablenkeinrichtung vom Raum aus nicht zugänglich sind, ohne die Schutzebene zu verletzen. Auch die innerhalb dieser Schutzebene gemessenen Entfernungswerte können während des Überwachungsbetriebs mit einem Sollzustand verglichen werden, der einer unverletzten, d.h. nicht durchbrochenen, Schutzebene entspricht, um auf diese Weise Verletzungen der Schutzebene als Abweichungen von diesem Sollzustand erkennen zu können. Man kann also sagen, dass die Vorrichtung nicht nur den Raum überwacht, sondern gleichzeitig sich selbst vor Manipulationen schützt, ohne dass hierfür ein zusätzliches System erforderlich wäre.

Erfindungsgemäß werden also ein Entfernungsmesser, der Strahlung in wenigstens zwei Ebenen aussenden kann, und eine Ablenkeinrichtung innerhalb eines zu überwachenden Raumes derart angeordnet, dass eine Überwachungsebene durch den Raum bewegt wird und eine Schutzebene in der vorstehend beschriebenen Weise vor Manipulationen schützt. Diese Kombination aus sich durch den Raum bewegender Überwachungsebene und zusätzlicher, insbesondere feststehender Schutzebene ermöglicht auf denkbar einfache und kostengünstige Weise eine lückenlose Raumüberwachung und gleichzeitig einen lückenlosen Manipulationsschutz der Überwachungsvorrichtung.

Trotz der einfachen und kostengünstigen Realisierbarkeit steht mit der Erfindung für die Überwachung von Schleusen- oder Übergaberäumen ein aktiv messendes System zur Verfügung, was für dessen Akzeptanz von nicht unerheblicher Bedeutung ist, da die Vorteile aktiv messender System gerade für Überwachungszwecke allgemein bekannt sind und in vielen Fällen überhaupt nur aktiv messende System akzeptiert werden.

Selbst dann, wenn die Orientierung der Überwachungsebene im Raum nicht gemessen wird, sondern mit den bekannten Abmessungen des zu überwachenden Raumes gearbeitet, d.h. die geometrische Eindeutigkeit der Gesamtanordnung ausgenutzt wird, hat die Erfindung den weiteren Vorteil einer relativ hohen Toleranz in Bezug auf Ungenauigkeiten bei der Positionierung bzw. Justierung des Systems. Abweichungen beispielsweise der Relativlage zwischen Entfernungsmesser und Ablenkeinrichtung von einer vorgesehenen Solllage haben zwar einen von dem eigentlich erwarteten Sollzustand abweichenden Zustand zur Folge. Diese Abweichungen sind aber gewissermaßen nur systematischer Natur, da sich die tatsächlichen Abmessungen des Raumes nicht ändern. Der Entfernungsmesser registriert gewissermaßen einen gegenüber dem erwarteten Sollzustand "verschobenen, vergrößerten, verkleinerten oder verzerrten" Raum, der aber für eine entsprechend vorbereitete Auswerteeinrichtung, insbesondere einen darin ablaufenden Auswertealgorithmus, immer noch als ein den Sollzustand repräsentierender Raum erkennbar ist. Diese Robustheit des erfindungsgemäßen Systems gegenüber Ungenauigkeiten bei dessen Montage im Raum führt im Ergebnis zu einer signifikanten Reduzierung der Installationskosten und erhöht damit die Akzeptanz eines derartigen Systems für potenzielle Betreiber. Besonders ausgeprägt ist dieser Vorteil bei geometrisch einfachen Räumen, da diese bei der Auswertung der gemessenen Entfernungswerte besonders leicht erkannt werden.

Bevorzugte Ausführungen der erfindungsgemäßen Verwendung, des erfindungsgemäßen Überwachungsverfahrens sowie der erfindungsgemäßen Überwachungsvorrichtung sind auch in den abhängigen Ansprüchen, der Beschreibung sowie der Zeichnung angegeben.

Bevorzugt ist der Raum über zwei, insbesondere einander gegenüberliegende, Seiten zugänglich und dient dazu, Gegenstände, die über eine Einbringseite in den Raum eingebracht wurden, über eine Entnahmeseite aus dem Raum zu entnehmen, wobei insbesondere die Vorrichtung derart betrieben wird, dass der Raum zumindest unmittelbar vor einem Öffnen der Entnahmeseite mittels der Vorrichtung überwacht und eine Maßnahme getroffen, insbesondere ein Alarm ausgelöst, wird, wenn anhand der in der Schutzebene und/oder der Überwachungsebene gemessenen Entfernungen eine Abweichung von einem vorgegebenen Sollzustand festgestellt wird.

Die Vorrichtung ist insbesondere an oder nahe der Decke des Raumes und/oder an oder nahe einer der Seitenwände angebracht. Des Weiteren kann vorgesehen sein, dass der Raum wenigstens näherungsweise quaderförmig ist, wobei insbesondere der Raum in der Länge, Breite und Höhe jeweils weniger als 10 m, vorzugsweise weniger als 5 m und insbesondere bevorzugt weniger als 3 m misst.

Das erfindungsgemäße Verfahren zeichnet sich dadurch aus, dass mittels einer Vorrichtung der hier angegebenen Art im Raum wenigstens eine, insbesondere feststehende, Schutzebene und zumindest eine sich relativ zur Schutzebene bewegende, den Raum abtastende Überwachungsebene erzeugt werden.

Wie bereits erwähnt, kann auf diese Weise die Vorrichtung nicht nur den Raum oder zumindest einen relevanten Teil des Raumes lückenlos überwachen, sondern mit der Schutzebene gleichzeitig sich selbst vor Manipulationen schützen.

Der Sollzustand bezüglich der Schutzebene und/oder der Überwachungsebene kann insbesondere ausschließlich durch die Abmessungen des Raumes und die Anbauposition der Vorrichtung im Raum vorgegeben werden. Wie bereits erwähnt, erfolgt dies insbesondere dann, wenn es sich bei dem Raum um einen Übergabe- oder Schleusenraum handelt, der eine geometrisch einfache Form aufweist. Der Sollzustand kann dabei bezüglich der Überwachungsebene und/oder bezüglich der Schutzebene zusätzlich durch einen oder mehrere zugelassene Gegenstände im Raum vorgegeben werden.

Vorzugsweise wird mittels der Vorrichtung ein Abbild des Raumes erstellt, und zwar entweder ausschließlich aus den in der Überwachungsebene gemessenen Entfernungen einerseits und den Abmessungen des Raumes und der Anbauposition der Vorrichtung im Raum, die einer Auswerteeinrichtung der Vorrichtung bekannt, andererseits, oder aus den in der Überwachungsebene gemessenen Entfernungen einerseits und Informationen über die jeweilige Lage der Überwachungsebene im Raum, die einer Auswerteeinrichtung der Vorrichtung zusätzlich zur Verfügung gestellt werden, andererseits.

Die Schutzebene kann insbesondere derart erzeugt werden, dass ein innerhalb des Raumes gelegener Einbaubereich für zumindest einen Teil der Vorrichtung, insbesondere für die Einrichtung zur Entfernungsmessung und eine bewegbare Ablenkeinrichtung, lückenlos durch eine zumindest die Schutzebene umfassende Schutzfläche von dem Rest des Raumes getrennt wird. Diejenigen Komponenten der Überwachungsvorrichtung, die innerhalb des Raumes angeordnet werden, sind somit vor Manipulationen geschützt.

Was die Erzeugung der Überwachungsebene anbetrifft, so kann diese insbesondere derart erfolgen, dass zumindest der durch die Schutzfläche von einem Einbaubereich getrennte Rest des Raumes lückenlos abgetastet wird. Dabei kann vorgesehen sein, dass auch der Einbaubereich zumindest teilweise abgetastet wird.

Die erfindungsgemäße Überwachungsvorrichtung umfasst eine Einrichtung zur Entfernungsmessung durch Bestimmen der Laufzeit von elektromagnetischer Strahlung, wobei diese Einrichtung wenigstens einen Sender zur, insbesondere gepulsten, Aussendung der elektromagnetischen Strahlung und wenigstens einen Empfänger zum Nachweis der ausgesandten und im Raum oder an Begrenzungen des Raumes reflektierten Strahlung umfasst, und wobei die Vorrichtung dazu ausgebildet ist, die Strahlung in wenigstens zwei Ebenen auszusenden, von denen eine erste Ebene eine, insbesondere im Raum feststehende, Schutzebene und eine zweite Ebene eine abtastende Überwachungsebene ist, die sich während des Überwachungsbetriebs relativ zur Schutzebene durch den Raum bewegt.

Vorzugsweise umfasst die Vorrichtung eine Auswerteeinrichtung, die dazu ausgebildet ist, ein Abbild des Raumes zu erstellen. Dies kann auf verschiedene Weisen erfolgen, wie es vorstehend bereits erläutert wurde.

Bevorzugt umfasst die Einrichtung wenigstens einen, insbesondere genau einen, den Sender und den Empfänger umfassenden Scanner, insbesondere Laserscanner, der dazu ausgebildet ist, die elektromagnetische Strahlung in wenigstens zwei Ebenen und innerhalb der Ebenen jeweils nacheinander in unterschiedliche Winkelrichtungen auszusenden. Insbesondere verlaufen die beiden Ebenen zueinander geneigt.

Die Einrichtung kann zur Erzeugung der beiden Ebenen eine bewegbare Ablenkeinheit umfassen, die wenigstens zwei Flächen zur Ablenkung der vom Sender ausgesandten Strahlung aufweist, wobei die beiden Flächen durch die Bewegung der Ablenkeinheit abwechselnd in eine wirksame Stellung relativ zum Sender gelangen und die eine Fläche die eine Ebene und die andere Fläche die andere Ebene erzeugt. Insbesondere umfasst die Ablenkeinheit einen Drehspiegel mit zwei zueinander geneigt angeordneten Reflexionsflächen.

Um die Bewegung der Überwachungsebene durch den Raum zu erzeugen, umfasst die Vorrichtung vorzugsweise eine relativ zum Sender bewegbare Ablenkeinrichtung, insbesondere einen Drehspiegel, die dazu ausgebildet ist, von der Einrichtung in einer Ebene ausgesandte Strahlung in unterschiedliche, von ihrer Stellung abhängige Richtungen abzulenken. Um zumindest einen Teil der Schutzebene zu erzeugen, umfasst die Vorrichtung erfindungsgemäß eine relativ zum Sender feststehende Ablenkeinrichtung, insbesondere einen Spiegel, die dazu ausgebildet ist, von der Einrichtung in einer Ebene ausgesandte Strahlung abzulenken.

Vorzugsweise ist der Sender ein Bestandteil einer Baueinheit, insbesondere eines Scanners, die räumlich getrennt von der bewegbaren Ablenkeinrichtung und/oder der feststehenden Ablenkeinrichtung im Raum anbringbar ist.

Insbesondere sind die Baueinheit einerseits und die bewegbare Ablenkeinrichtung und/oder die feststehende Ablenkeinrichtung andererseits derart ausgebildet, dass sie in Abhängigkeit von den Abmessungen des Raumes derart im Raum anbringbar sind, dass während des Überwachungsbetriebs ein zumindest im Wesentlichen lückenloser Schutz der Baueinheit durch eine zumindest die Schutzebene umfassende Schutzfläche und/oder eine zumindest im Wesentlichen lückenlose Abtastung des Raumes durch die Überwachungsebene gegeben sind bzw. ist.

Die Erfindung wird im Folgenden beispielhaft unter Bezugnahme auf die Zeichnung beschrieben. Es zeigen:
- Fig. 1: schematisch eine Seitenansicht eines zu überwachenden Raumes mit einer Überwachungsvorrichtung gemäß der Erfindung, und
- Fig. 2: eine schematische Draufsicht auf den Raum von Fig. 1.

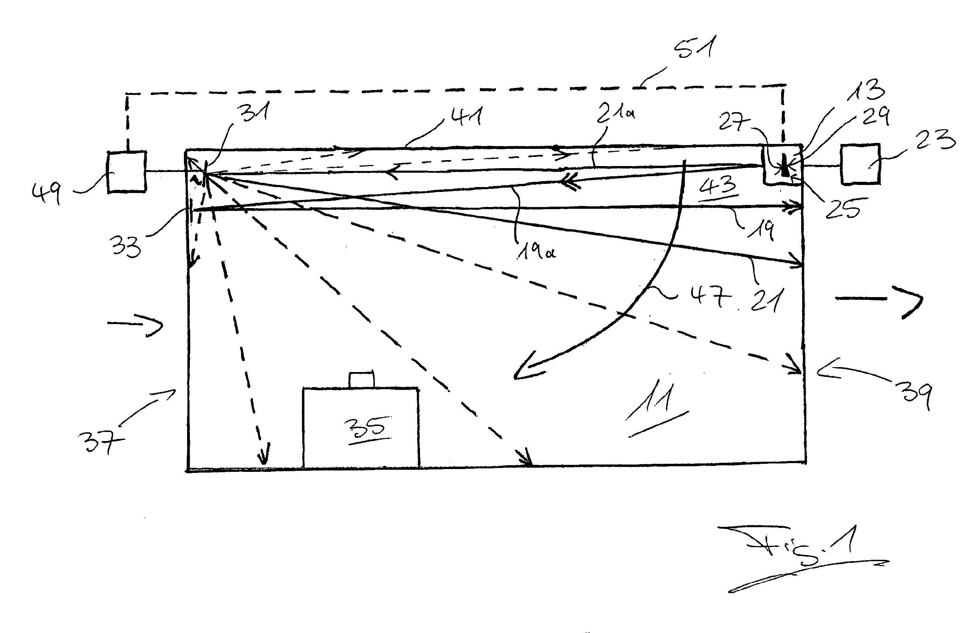

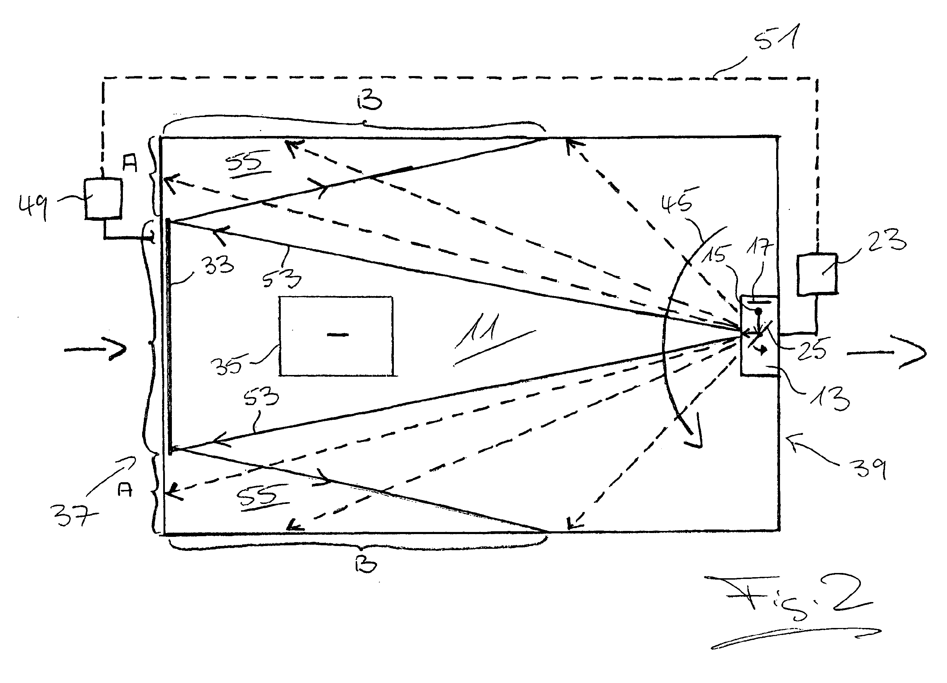

Die Fig. 1 und 2 zeigen einen quaderförmigen Übergabe- oder Schleusenraum 11 eines Geldinstituts. Der Raum 11 besitzt eine Einbringseite 37 und eine Entnahmeseite 39 und dient dazu, beispielsweise einen Geldkoffer 35 über die Einbringseite 37 in den Raum 11 einzubringen und zu einem späteren Zeitpunkt über die Entnahmeseite 39 aus dem Raum 11 zu entnehmen.

Der Raum 11 ist mit einer Überwachungsvorrichtung versehen, die eine Einrichtung zur Entfernungsmessung in Form eines einzigen Laserscanners 13, eine bewegbare Ablenkeinrichtung 31 in Form eines Drehspiegels sowie eine feststehende Ablenkeinrichtung 33 ebenfalls in Form eines Spiegels umfasst.

Dem Laserscanner 13 ist eine Auswerteeinrichtung 23 zugeordnet, die dazu dient, mittels des Laserscanners 13 gemessene Entfernungswerte auszuwerten. Hierzu ist die Auswerteeinrichtung mit einem Mikroprozessor ausgestattet, der zur Verarbeitung entsprechender Algorithmen ausgebildet ist.

Dem räumlich entfernt vom Laserscanner 13 angeordneten Drehspiegel 31 ist eine Antriebs- und Steuereinrichtung 49 zugeordnet. In einer besonders einfachen Ausführung der Erfindung handelt es sich hierbei um eine z.B. lediglich ein- und ausschaltbare Einrichtung, die dazu in der Lage ist, den Drehspiegel 31 entweder dauerhaft oder zeitweise in Rotation zu versetzen, wobei eine Kommunikation zwischen Drehspiegel 31 bzw. Antriebs- und Steuereinrichtung 49 und Laserscanner 13 bzw. Auswerteeinrichtung 23 nicht erfolgt. Wie durch die gestrichelt dargestellte Leitung 51 angedeutet, kann eine derartige Kommunikation in einer alternativen Ausführung der Erfindung aber durchaus vorgesehen sein. Diese Kommunikation, die selbstverständlich auch drahtlos erfolgen kann, dient dann insbesondere dazu, die momentane Drehstellung des Drehspiegels 31 an den Laserscanner 13 bzw. dessen Auswerteeinrichtung 23 zu übermitteln.

Der Laserscanner 13 und die beiden Spiegel 31, 33, die hier die wesentlichen Komponenten der Überwachungsvorrichtung bilden, sind innerhalb des Raumes 11 an bzw. nahe der Raumdecke 41 angeordnet, wobei der Laserscanner 13 mittig an der die Entnahmeseite 39 bildenden Schmalseite des Raumes 11 und die beiden Spiegel 31, 33 an der gegenüberliegenden, die Einbringseite 37 bildenden Schmalseite des Raumes 11 angeordnet sind. Der feststehende Spiegel 33 befindet sich dabei unterhalb des Drehspiegels 31.

Der Laserscanner 13 umfasst in diesem Ausführungsbeispiel einen einzigen Sender 15 zur Aussendung von Laserstrahlung im für das menschliche Auge sichtbaren oder unsichtbaren Wellenlängenbereich, eine Ablenkeinheit 25 in Form eines Drehspiegels sowie einen für die jeweilige Laserstrahlung empfindlichen Empfänger 17. Optische Strahlführungseinrichtungen wie z.B. Linsen, die dem Sender 15 und dem Empfänger 17 zugeordnet sind, wurden zur Vereinfachung nicht dargestellt.

Die Entfernungsmessung durch Bestimmen der Laufzeit von elektromagnetischer Strahlung ist sowohl mit kontinuierlich emittierter Strahlung als auch mit gepulst betriebenem Sender 15 möglich. In jedem Fall wird die vom Sender 15 emittierte Strahlung in eine von der momentanen Stellung des Drehspiegels 25 abhängige Richtung in den Raum 11 hinein ausgesandt. Die im Raum 11 oder an den Begrenzungen des Raumes 11 reflektierte Strahlung gelangt auf dem entgegengesetzt gerichteten Ausbreitungsweg zurück auf den Empfänger 17, da die Geschwindigkeit der Drehbewegung des Drehspiegels 25 gegenüber der Ausbreitungsgeschwindigkeit der Strahlung vernachlässigbar ist. Der Laserscanner 13 liefert somit für jede Richtung, in welche Strahlung ausgesendet wird, einen Entfernungswert. Die Richtung, in welche die Strahlung ausgesendet wird, ist dem Laserscanner 13 über die Drehstellung des internen Drehspiegels 25 bekannt.

Wie in Fig. 1 angedeutet ist, besitzt der Drehspiegel 25 zwei geneigt zueinander angeordnete Reflexionsflächen, d.h. eine ebene Vorderseite 27 des Drehspiegels 25 ist gegenüber einer ebenfalls ebenen Rückseite 29 des Drehspiegels 25 geneigt. Solange die vom Sender 15 ausgesandte Strahlung auf eine der beiden ebenen Reflexionsflächen 27, 29 trifft, wird die Strahlung aufgrund der Drehung des Drehspiegels 25 innerhalb einer Ebene ausgesandt, deren Lage im Raum 11 durch die Neigung der Reflexionsfläche 27 bzw. 29 im Raum 11 bestimmt ist.

Somit wird bei einer Drehung des Drehspiegels 25 um 360° also zunächst während eines Drehwinkel von 180° über die eine Reflexionsfläche 27 die Strahlung in der einen Ebene 21a (vgl. Fig. 1) ausgesandt, wobei für den sich anschließenden Drehwinkel von 180° die Strahlung über die Reflexionsfläche 29 in der Ebene 19a ausgesandt wird, die zu der Ebene 21 a geneigt verläuft. Die Ebene 21 a wird im Folgenden auch als primäre Überwachungsebene bezeichnet, während die Ebene 19a im Folgenden auch als primäre Schutzebene bezeichnet wird.

Der Laserscanner 13 ist in Bezug auf die beiden Spiegel 31, 33 derart ausgerichtet, dass ein Teil der in der Ebene 19a ausgesandten Strahlung auf den feststehenden Spiegel 33 trifft, von welchem die Strahlung zurück in den Raum 11 reflektiert wird und so aufgrund der Drehung des Drehspiegels 25 eine feststehende Schutzebene 19 definiert (vgl. Fig. 2), in der die über die betreffende Reflexionsfläche 29 in Richtung des Spiegels 33 abgelenkte Strahlung in den Raum 11 ausgesandt wird. Wie Fig. 1 zu entnehmen ist, ist die Schutzebene 19 parallel zur Raumdecke 41 orientiert, wobei erfindungsgemäß aber auch eine zur Raumdecke 41 geneigte Ausrichtung der Schutzebene 19 möglich ist.

Bei dem feststehenden Spiegel 33 handelt es sich beispielsweise um einen schmalen Streifen, der, wie Fig. 2 zeigt, sich nicht über die gesamte Breite des Raumes 11 erstreckt. In Fig. 2 sind die Randstrahlen 53 dargestellt, die auf die beiden seitlichen Enden des Spiegels 33 auftreffen. Aufgrund dieser gegenüber der Raumbreite verkürzten Ausdehnung des Spiegels 33 entstehen auf beiden Seiten des Spiegels 33 dreieckige Bereiche 55, die während der in Pfeilrichtung 45 erfolgenden Scanbewegung innerhalb der primären Schutzebene 19a nicht von solcher Strahlung durchquert werden, welche vom Spiegel 33 reflektiert wurde.

Eine lückenlose Überwachung praktisch der gesamten Querschnittsfläche des Raumes 11 erfolgt gleichwohl, da diejenige in Fig. 2 durch gestrichelte Linien angedeutete Strahlung der primären Schutzebene 19a, die unmittelbar, also ohne "Umweg" über einen Spiegel, von den Bereichen A und B der Raumwände reflektiert wird, auf den Empfänger 17 des Laserscanners 13 gelangt und ebenfalls ausgewertet wird. Die "Unstetigkeit" in der Laufzeit der Strahlung beim Übergang vom Spiegel 33 auf die Wandbereiche A kann bei der Auswertung der gemessenen Entfernungen in der Auswerteeinrichtung 23 problemlos berücksichtigt werden. Ebenfalls berücksichtigt werden kann der Umstand, dass von solchen Wandbereichen, die vom Laserscanner 13 aus gesehen im gleichen Winkelbereich liegen, reflektierte Strahlung, die einerseits über den Spiegel 33 und andererseits - bei einem anderen Ablenkwinkel des Drehspiegels 25 - direkt zurück zum Laserscanner 13 gelangt, unterschiedliche Entfernungswerte liefert. Alternativ oder zusätzlich kann die Auswertung der reflektierten Strahlung lediglich über einen entsprechend reduzierten Drehwinkel erfolgen, um derartige "Doppelmessungen" zu vermeiden.

Als ein auf die Überwachungsebene 19 und die primäre Schutzebene 19a, die zusammen auch als Schutzfläche 19, 19a bezeichnet werden, bezogener Sollzustand ist eine Menge von Entfernungswerten in der Auswerteeinrichtung 23 gespeichert, die einer unverletzten Schutzfläche 19, 19a entspricht, also einem Zustand mit freier Schutzebene 19 und freier primärer Schutzebene 19a, in welchem die sich in der Schutzebene 19 und der primären Schutzebene 19a ausbreitende Strahlung nicht an unzulässigen Gegenständen im Raum 11 reflektiert wird.

Folglich sind der Laserscanner 13 und die Spiegel 31, 33 durch die Schutzfläche 19, 19a vor vom Raum 11 ausgehenden Manipulationen geschützt, wobei - wie erläutert - in den dreieckigen Bereichen 55 (vgl. Fig. 2), die nicht durch die Schutzebene 19 abgedeckt sind, der Schutz durch die in der primären Schutzebene 19a ausgesandte Strahlung sichergestellt ist.

Die Größe der dreieckigen Bereiche 55 ist von der Länge des Spiegels 33 abhängig. Ausgehend von der Darstellung in Fig. 2 werden die dreieckigen Bereiche 55 mit zunehmender Länge des Spiegels 33 kleiner. Erstreckt sich der Spiegel 33 über die gesamte Breite des Raumes 11, so sind die dreieckigen Bereiche 55 praktisch vollständig verschwunden. Der Schutz des Laserscanners 13 und der Spiegel 31, 33 vor Manipulationen erfolgt dann lückenlos durch die Schutzebene 19, in der sich die vom Spiegel 33 reflektierte Strahlung ausbreitet.

Allerdings ist auch dann, wenn der zu überwachende Raum 11 vergleichsweise kleine Abmessungen aufweist, ein sich über die gesamte Raumbreite erstreckender Spiegel 33 mit relativ hohen Beschaffungs- und Installationskosten verbunden. In der Praxis kann es genügen, wenn sich der Spiegel 33 - wie in Fig. 2 dargestellt - nicht über die gesamte Raumbreite erstreckt, da - wie erläutert - ein lückenloser Schutz durch die Kombination aus Schutzebene 19 und primärer Schutzebene 19a stets sichergestellt ist.

Theoretisch wäre es möglich, auf den feststehenden Spiegel 33 ganz zu verzichten. Der Schutz wäre dann allerdings nicht mehr lückenlos, da der Laserscanner 13 von unten zugänglich wäre, ohne dass dies durch die ausgesandte primäre Schutzebene 19a detektiert werden könnte. Um einen lückenlosen Schutz zu gewährleisten, ist also ein feststehender Spiegel 33 vorzusehen, dessen Länge zumindest so bemessen ist, dass eine Schutzebene 19 entsteht, die den Bereich unterhalb des Laserscanners 13 abdeckt.

Der Übersichtlichkeit halber sind in Fig. 2 der Drehspiegel 31 und die dazugehörigen Strahlengänge nicht mit eingezeichnet. In geometrischer Hinsicht gelten für den Drehspiegel 31 im Prinzip die gleichen Überlegungen, wie sie vorstehend in Verbindung mit dem feststehenden Spiegel 33 dargelegt wurden. Die Länge des Drehspiegels 31 wird in Abhängigkeit von der jeweiligen Anwendung und/oder von den räumlichen bzw. geometrischen Bedingungen vor Ort gewählt. Es kann dabei erforderlich sein, dass sich der Drehspiegel 31 über die gesamte Breite des Raumes 11 erstrecken muss, um eine lückenlose Überwachung bzw. Abtastung des Raumes 11 zu erzielen. Ein kürzerer Drehspiegel 31 kann aber ausreichend sein, insbesondere dann, wenn man davon ausgeht, dass verbleibende Volumina im Raum 11, die dann nicht überwacht bzw. abgetastet werden, unkritisch sind, da sie z.B. zu klein sind, als dass sich beispielsweise eine Person oder ein nicht zugelassener Gegenstand in einem dieser Volumina verstecken könnte.

Um eine lückenlose Überwachung des Raumes 11 mittels der Überwachungsebene 21 sicherzustellen, ist die Länge des Drehspiegels 31 derart bemessen, dass die Überwachungsebene 21, in der sich die vom Drehspiegel 31 reflektierte Strahlung ausbreitet, das gesamte zu überwachende Volumen des Raumes 11 durchquert, wenn sich der Spiegel 31 dreht, d.h. kein Volumenelement im Raum existiert, das nicht von der sich in der Überwachungsebene 21 ausbreitenden Strahlung durchquert wird.

In Fig. 1 sind mit gestrichelten Linien verschiedene Orientierungen der Überwachungsebene 21 im Raum 11 angedeutet, die sich ergeben, wenn der Drehspiegel 31 andere als die in Fig. 1 dargestellte Drehstellung einnimmt. Die Drehrichtung des Spiegels 31 ist durch einen Pfeil angedeutet, so dass sich die Überwachungsebene 21 in der durch den Pfeil 47 angedeuteten Richtung durch den Raum 11 hindurch bewegt.

Dabei kann mittels der Überwachungsebene 21 auch der Einbaubereich 43 oberhalb der Schutzebene 19 erfasst werden, d.h. es erfolgt auch eine Überwachung der Raumdecke 41, so dass die Vorrichtung aus Laserscanner 13 und Spiegeln 31, 33 auch vor von der Raumdecke 41 ausgehenden Manipulationen geschützt ist.

Was die Auswertung der während des Überwachungsbetriebs gemessenen Entfernungswerte anbetrifft, so wird auch auf den Einleitungsteil verwiesen. Entweder mit oder ohne Einbeziehung von Informationen über die Drehstellung des Drehspiegels 31 erstellt die Auswerteeinrichtung 23 des Laserscanners 13 aus den mittels der Überwachungsebene 21 gemessenen Entfernungswerten ein aktuelles Abbild des Raumes 11, das mit einem gespeicherten Sollzustand verglichen wird. Auch in Bezug auf die Schutzfläche 19, 19a werden die gemessenen Entfernungswerte daraufhin überprüft, ob der durch diese Messwerte repräsentierte aktuelle Zustand einem gespeicherten Sollzustand entspricht.

Sowohl bezüglich der Überwachungsebene 21 als auch der Schutzfläche 19, 19a können jeweils mehrere Sollzustände gespeichert sein, die jeweils eine zulässige Situation im Raum 11 definieren.

### Bezugszeichenliste

- 11: Raum
- 13: Einrichtung, Baueinheit, Scanner
- 15: Sender
- 17: Empfänger
- 19: Schutzebene
- 19a: primäre Schutzebene
- 21: Überwachungsebene
- 21 a: primäre Überwachungsebene
- 23: Auswerteeinrichtung
- 25: Ablenkeinheit, Drehspiegel
- 27: Fläche, Vorderseite
- 29: Fläche, Rückseite
- 31: bewegbare Ablenkeinrichtung, Drehspiegel
- 33: feststehende Ablenkeinrichtung, Spiegel
- 35: Gegenstand, Geldkoffer
- 37: Einbringseite
- 39: Entnahmeseite
- 41: Decke des Raumes
- 43: Einbaubereich
- 45: Abtastrichtung innerhalb der Ebenen
- 47: Bewegungsrichtung der Überwachungsebene im Raum
- 49: Antriebs- und Steuereinrichtung
- 51: Leitung
- 53: Randstrahl
- 55: dreieckiger Bereich

- A: Wandbereich
- B: Wandbereich

## Patentansprüche

1. Vorrichtung zur Überwachung eines Raumes (11)
mit einer Einrichtung (13) zur Entfernungsmessung durch Bestimmen der Laufzeit von optischer Strahlung, wobei die Einrichtung wenigstens einen Sender (15) zur, insbesondere gepulsten, Aussendung der optischen Strahlung und wenigstens einen Empfänger (17) zum Nachweis der ausgesandten und im Raum (11) oder an Begrenzungen des Raumes (11) reflektierten Strahlung umfasst,
wobei die Vorrichtung dazu ausgebildet ist, die Strahlung in wenigstens zwei Ebenen (19, 21) auszusenden,
**dadurch gekennzeichnet, dass**
während des Überwachungsbetriebs eine erste Ebene eine im Raum (11) feststehende Schutzebene (19) und eine zweite Ebene eine abtastende Überwachungsebene (21) ist, und dass sich die Überwachungsebene (21) relativ zur Schutzebene (19) bewegt,
wobei die Vorrichtung zur Erzeugung zumindest eines Teils der Schutzebene (19) eine relativ zum Sender (15) feststehende Ablenkeinrichtung (33), insbesondere einen Spiegel, aufweist, die dazu ausgebildet ist, von der Einrichtung (13) in einer Ebene (19a) ausgesandte Strahlung abzulenken, und
wobei die Schutzebene derart innerhalb des Raumes ausgerichtet ist, dass alle relevanten Komponenten der Überwachungsvorrichtung vor Manipulationen geschützt sind.

2. Vorrichtung nach Anspruch 1,
**dadurch gekennzeichnet,**
**dass** die Vorrichtung eine Auswerteeinrichtung (23) umfasst, die dazu ausgebildet ist, ein Abbild des Raumes (11) zu erstellen, und zwar
entweder ausschließlich aus den in der Überwachungsebene (21) gemessenen Entfernungen einerseits und den Abmessungen des Raumes (11) und der Anbauposition der Vorrichtung im Raum, die der Auswerteeinrichtung (23) bekannt sind, andererseits
oder aus den in der Überwachungsebene (21) gemessenen Entfernungen einerseits und Informationen über die jeweilige Lage der Überwachungsebene (21) im Raum, die der Auswerteeinrichtung (23) zusätzlich zur Verfügung gestellt werden, andererseits.

3. Vorrichtung nach Anspruch 1 oder 2,
**dadurch gekennzeichnet,**
**dass** die Einrichtung (13) wenigstens einen, insbesondere genau einen, den Sender (15) und den Empfänger (17) umfassenden Scanner (13), insbesondere Laserscanner, aufweist, der dazu ausgebildet ist, die elektromagnetische Strahlung in wenigstens zwei Ebenen (19a, 21a) und innerhalb der Ebenen (19a, 21a) jeweils nacheinander in unterschiedliche Winkelrichtungen auszusenden, wobei insbesondere die beiden Ebenen (19a, 21a) zueinander geneigt verlaufen.

4. Vorrichtung nach einem der Ansprüche 1 bis 3,
**dadurch gekennzeichnet,**
**dass** die Einrichtung (13) zur Erzeugung der beiden Ebenen (19a, 21a) eine bewegbare Ablenkeinheit (25) umfasst, die wenigstens zwei Flächen (27, 29) zur Ablenkung der vom Sender (15) ausgesandten Strahlung aufweist, wobei die beiden Flächen (27, 29) durch die Bewegung der Ablenkeinheit (25) abwechselnd in eine wirksame Stellung relativ zum Sender (15) gelangen und die eine Fläche (27) die eine Ebene (21a) und die andere Fläche (29) die andere Ebene (19a) erzeugt,
wobei insbesondere die Ablenkeinheit (25) einen Drehspiegel mit zwei zueinander geneigt angeordneten Reflexionsflächen (27, 29) umfasst.

5. Vorrichtung nach einem der Ansprüche 1 bis 4,
**dadurch gekennzeichnet,**
**dass** die Vorrichtung zur Erzeugung der Bewegung der Überwachungsebene (21) eine relativ zum Sender (15) bewegbare Ablenkeinrichtung (31), insbesondere einen Drehspiegel, aufweist, die dazu ausgebildet ist, von der Einrichtung (13) in einer Ebene (21a) ausgesandte Strahlung in unterschiedliche, von ihrer Stellung abhängige Richtungen abzulenken.

6. Vorrichtung nach einem der Ansprüche 1 bis 5,
**dadurch gekennzeichnet,**
**dass** der Sender (15) ein Bestandteil einer Baueinheit (13), insbesondere eines Scanners, ist, die räumlich getrennt von der bewegbaren Ablenkeinrichtung (31) und/oder der feststehenden Ablenkeinrichtung (33) anbringbar ist.

7. Verfahren zur Überwachung eines Raumes (11) mittels einer Vorrichtung nach einem der Ansprüche 1 bis 6,
bei dem mittels der Vorrichtung im Raum (11) wenigstens eine, insbesondere feststehende, Schutzebene (19) und zumindest eine sich relativ zur Schutzebene (19) bewegende, den Raum (11) abtastende Überwachungsebene (21) erzeugt werden.

8. Verfahren nach Anspruch 7,
**dadurch gekennzeichnet,**
**dass** eine Maßnahme getroffen, insbesondere ein Alarm ausgelöst, wird, wenn anhand der in der Schutzebene (19) oder der Überwachungsebene (21) gemessenen Entfernungen eine Abweichung von einem vorgegebenen Sollzustand festgestellt wird.

9. Verfahren nach Anspruch 8,
**dadurch gekennzeichnet,**
**dass** der Sollzustand bezüglich der Schutzebene (19) und/oder der Überwachungsebene (21), insbesondere ausschließlich, durch die Abmessungen des Raumes (11) und die Anbauposition der Vorrichtung im Raum (11) vorgegeben wird,
wobei insbesondere der Sollzustand bezüglich der Überwachungsebene (21) zusätzlich durch einen oder mehrere zugelassene Gegenstände (35) im Raum vorgegeben wird.

10. Verfahren nach einem der Ansprüche 7 bis 9,
**dadurch gekennzeichnet,**
**dass** mittels der Vorrichtung ein Abbild des Raumes (11) erstellt wird, und zwar
entweder ausschließlich aus den in der Überwachungsebene (21) gemessenen Entfernungen einerseits und den Abmessungen des Raumes (11) und der Anbauposition der Vorrichtung im Raum (11), die einer Auswerteeinrichtung (23) der Vorrichtung bekannt sind, andererseits
oder aus den in der Überwachungsebene (21) gemessenen Entfernungen einerseits und Informationen über die jeweilige Lage der Überwachungsebene (21) im Raum (11), die einer Auswerteeinrichtung (23) der Vorrichtung zusätzlich zur Verfügung gestellt werden, andererseits.

11. Verfahren nach einem der Ansprüche 7 bis 10
**dadurch gekennzeichnet,**
**dass** die Schutzebene (19) derart erzeugt wird, dass ein innerhalb des Raumes (11) gelegener Einbaubereich (43) für zumindest einen Teil der Vorrichtung, insbesondere für die Einrichtung (13) zur Entfernungsmessung und eine bewegbare Ablenkeinrichtung (31), lückenlos durch eine zumindest die Schutzebene (19) umfassende Schutzfläche (19, 19a) von dem Rest des Raumes (11) getrennt wird, und/oder dass die Überwachungsebene (21) derart erzeugt wird, dass zumindest der durch die Schutzfläche (19, 19a) von einem Einbaubereich (43) getrennte Rest des Raumes (11) lückenlos abgetastet wird.

12. Verwendung einer Vorrichtung nach einem der Ansprüche 1 bis 6 zur Überwachung eines, insbesondere in einem Geldinstitut befindlichen, Übergabe- oder Schleusenraumes (11), insbesondere gemäß einem Verfahren nach einem der Ansprüche 7 bis 11.

13. Verwendung nach Anspruch 12,
**dadurch gekennzeichnet,**
**dass** genau ein im Raum (11) angeordneter Laserscanner (13) verwendet wird, der die Schutzebene (19) und die Überwachungsebene (21) mittels genau eines Senders (15), einer bewegbaren, wenigstens zwei Flächen (27, 29) zur Ablenkung der vom Sender (15) ausgesandten Strahlung aufweisenden Ablenkeinheit (25), und zumindest einer im Raum (11) angeordneten Ablenkeinrichtung (31, 33) erzeugt,
wobei - jeweils bezogen auf die Abmessungen des Raumes (11) - der Sender (15) und die Ablenkeinheit (25) nahe beieinander, insbesondere in einem gemeinsamen Gehäuse, und die Ablenkeinrichtung (31, 33) räumlich von dem Sender (15) und der Ablenkeinheit (25) getrennt angeordnet sind, insbesondere an oder in der Nähe von einander gegenüberliegenden Seiten, bevorzugt Schmalseiten, des Raumes (11).

14. Verwendung nach Anspruch 12 oder 13,
**dadurch gekennzeichnet,**
**dass** der Raum (11) über zwei, insbesondere einander gegenüberliegende, Seiten zugänglich ist und dazu dient, Gegenstände (35), die über eine Einbringseite (37) in den Raum (11) eingebracht wurden, über eine Entnahmeseite (39) aus dem Raum (11) zu entnehmen, wobei insbesondere die Vorrichtung derart betrieben wird, dass der Raum (11) zumindest unmittelbar vor einem Öffnen der Entnahmeseite (39) mittels der Vorrichtung überwacht und eine Maßnahme getroffen, insbesondere ein Alarm ausgelöst, wird, wenn anhand der in der Schutzebene (19) und/oder der Überwachungsebene (21) gemessenen Entfernungen eine Abweichung von einem vorgegebenen Sollzustand festgestellt wird.

15. Verwendung nach einem der Ansprüche 12 bis 14,
**dadurch gekennzeichnet,**
**dass** die Vorrichtung an oder nahe der Decke (41) des Raumes (11) und/oder einer der Seitenwände angebracht ist,
und/oder dass der Raum (11) wenigstens näherungsweise quaderförmig ist, wobei insbesondere der Raum (11) in der Länge, Breite und Höhe jeweils weniger als 10 m, vorzugsweise weniger als 5 m und insbesondere bevorzugt weniger als 3 m misst.

## Claims

1. An apparatus for monitoring a space (11),
having a device (!3) for distance measurement by determining the transit time of optical radiation, wherein the device includes at least one transmitter (15) for transmitting, in particular pulsed transmitting, of the optical radiation and at least one receiver (17) for verifying the transmitted radiation reflected in the space (11) or at boundaries of the space (11),
wherein the apparatus is configured to transmit the radiation in at least two planes (19, 21),
**characterised in that**
a first plane is a protected plane (19) fixed in the space (19) and a second plane is a scanning monitoring plane (21) during monitoring operation; and **in that** the monitoring plane (21) moves relative to the protected plane (19),
wherein the apparatus has a deflection device (33), in particular a mirror, fixed relative to the transmitter (15) for producing at least a part of the protected plane (19), said deflection device being configured to deflect radiation transmitted by the device (13) in a plane (19a), and
wherein the protected plane is oriented within the space such that all the relevant components of the monitoring apparatus are protected against manipulations.

2. An apparatus in accordance with claim 1,
**characterised in that**
the apparatus includes an evaluation device (23) which is configured to create an image of the space (11) and indeed
either only from the distances measured in the monitoring plane (21), on the one hand, and from the dimensions of the space (11) and the attachment position of the apparatus in the space, which are known to the evaluation device (23), on the other hand,
or from the distances measured in the monitoring plane (21), on the one hand, and information on the respective position of the monitoring plane (21) in the space, which is additionally provided to the evaluation device (23), on the other hand.

3. An apparatus in accordance with claim 1 or claim 2,
**characterised in that**
the device (13) comprises at least one scanner (13), in particular exactly one scanner, in particular a laser scanner, including the transmitter (15) and the receiver (17), which scanner is configured to transmit the electromagnetic radiation in at least two planes (19a, 21a) and respectively sequentially in different angular directions within the planes (19a, 21a), wherein in particular the two planes (19a, 21a) extend inclined to one another.

4. An apparatus in accordance with any one of the claims 1 to 3,
**characterised in that**
the device (13) for producing the two planes (19a, 2 1 a) has a movable deflection unit (25) which has at least two surfaces (27, 29) for deflecting the radiation transmitted by the transmitter (15), wherein the two surfaces (27, 29) alternately enter into an effective position relative to the transmitter (15) by the movement of the deflection unit (25) and the one surface (27) produces the one plane (21a) and the other surface (29) produces the other plane (19a), wherein in particular the deflection unit (25) includes a rotating mirror having two reflection surfaces (27, 29) arranged inclined to one another.

5. An apparatus in accordance with any one of the claims 1 to 4,
**characterised in that**
the apparatus has a deflection device (31), in particular a rotating mirror, movable relative to the transmitter (15) for producing the movement of the monitoring plane (21), said deflection device being configured to deflect radiation transmitted in a plane (21a) by the device (13) in different directions depending on its position.

6. Ah apparatus in accordance with any one of the claims 1 to 5,
**characterised in that**
the transmitter (15) is a component of an assembly (13), in particular of a scanner, which can be attached spatially separate from the movable deflection device (31) and/or from the fixed deflection device (33).

7. A method of monitoring a space (11) by means of an apparatus in accordance with any one of the claims 1 to 6,
wherein at least one protected plane (19), in particular a fixed protected plane, and at least one monitoring plane (21) moving relative to the protected plane (19) and scanning the space (11) are produced in the space (11) by means of the apparatus.

8. A method in accordance with claim 7,
**characterised in that**
a measure is taken, in particular an alarm is triggered, when a deviation from a predefined desired state is determined with reference to the distances measured in the protected plane (19) or in the monitoring plane (21).

9. A method in accordance with claim 8,
**characterised in that**
the desired state with respect to the protected plane (19) and/or with respect to the monitoring plane (21) is predefined, in particularly exclusively, by the dimensions of the space (11) and by the attachment position of the apparatus in the space (11), wherein in particular the designed state with respect to the monitoring plane (21) is additionally predefined by one or more permitted objects (35) in the space.

10. A method in accordance with any one of the claims 7 to 9,
**characterised in that**
an image of the space (11) is created by means of the apparatus, and indeed
either only from the distances measured in the monitoring plane (21), on the one hand, and from the dimensions of the space (11) and the attachment position of the apparatus in the space (11), which are known to the revaluation device (23), on the other hand or from the distances measured in the monitoring plane (21), on the one hand, and information on the respective position of the monitoring plane (21) in the space (11), which are additionally provided to an evaluation device (23) of the apparatus, on the other hand.

11. A method in accordance with any one of the claims 7 to 10
**characterised in that**
the protected plane (19) is produced such that an installation region (43), in particular disposed within the space (11), for at least a part of the apparatus, in particular for the device (13) for distance measurement, and a movable deflection device (31) is separated from the remainder of the space (11) without a gap by a protected surface (19, 19a) including at least the protected plane (19), and/or **in that** the monitoring plane (21) is produced such that at least the remainder of the space (11) separated from an installation region (13) by the protected surface (19, 19a) is scanned without a gap.

12. Use of an apparatus in accordance with any one of claims 1 to 6 for monitoring a transfer space or lock space (11), in particular located in a financial institution, in particular in accordance with any one of the claims 7 to 11,

13. Use in accordance with claim 12,
**characterised in that**
exactly one laser scanner (13) arranged in the space (11) is used which produces the protected plane (19) and the monitoring plane (21) by means of exactly one transmitter (15), by means of a movable deflection unit (25) having at least two surfaces (27, 29) for deflecting the radiation transmitted by the transmitter (15) and by means of at least one deflection device (31, 33) arranged in the space (11),
wherein - in each case with respect to the dimensions of the space (11) - the transmitter (15) and the deflection unit (25) are arranged close to one another, in particular in a common housing, and the deflection device (31, 33) are arranged spatially separate from the transmitter (15) and the deflection unit (25), in particular at or in the vicinity of mutually opposite sides, preferably narrow sides, of the space (11).

14. Use in accordance with claim 12 or claim 13,
**characterised in that**
the space (11) is accessible via two sides, in particular two mutually opposite sides, and serves to remove objects (35), which were introduced into the space (11) via an introduction side (37), from the space (11) via a removal side (39),
wherein the apparatus is in particular operated such that the space (11) is monitored by means of the apparatus at least directly before an opening of the removal side (39) and a measure is taken, in particular an alarm is triggered, when a deviation from a predefined desired state is determined with reference to the distances measured in the protected plane (19) and/or the monitoring plane (21).

15. Use in accordance with claims 12 to 14,
**characterised in that**
the apparatus is attached at or close to the ceiling (41) of the space (11) and/or one of the side walls,
and/or **in that** the space (11) is at least approximately parallelepiped in shape, with in particular the space (11) in each case measuring less than 10 m, preferably less than 5 m, and in particular preferably less than 3 m in length, width and height.

## Revendications

1. Dispositif pour surveiller un local (11), comprenant un système (13) pour la mesure de distance par détermination du temps de parcours d'un rayonnement optique, dans lequel le système comprend au moins un émetteur (15) pour émettre, en particulier de façon pulsée, le rayonnement optique et au moins un récepteur (17) pour mettre en évidence le rayonnement émis et réfléchi dans le local (11) ou au niveau des limites du local (11),
ledit dispositif étant réalisé pour émettre le rayonnement dans au moins deux plans (19, 21),
**caractérisé en ce que**
pendant le fonctionnement en surveillance un premier plan est un plan de protection (19) stationnaire dans le local (11) et un second plan est un plan de surveillance de palpage (21), et **en ce que** le plan de surveillance (21) se déplace par rapport au plan de protection (19),
dans lequel, pour engendrer au moins une partie du plan de protection (19), le dispositif comprend un moyen de déflexion (33) stationnaire par rapport à l'émetteur (15), en particulier un miroir, qui est réalisé pour dévier le rayonnement émis par le système (13) dans un plan (19a), et
dans lequel le plan de protection est orienté à l'intérieur du local de telle façon que toutes les composantes pertinentes du dispositif de surveillance sont protégées vis-à-vis de manipulations.

2. Dispositif selon la revendication 1,
**caractérisé en ce que**
le dispositif comprend un moyen d'évaluation (23) qui est réalisé pour établir une image du local (11), et cela
soit exclusivement à partir des éloignements mesurés dans le plan de surveillance (21) d'une part et à partir des dimensions du local (11) et de la position de montage du dispositif dans le local, lesquelles sont connues du moyen d'évaluation (23), d'autre part,
soit à partir des éloignements mesurés dans le plan de surveillance (21) d'une part, et à partir d'informations sur la situation respective du plan de surveillance (21) dans le local, qui sont additionnellement mises à disposition du moyen d'évaluation (23), d'autre part.

3. Dispositif selon la revendication 1 ou 2,
**caractérisé en ce que** le système (13) comprend au moins un scanner (13) et en particulier exactement un scanner, en particulier un scanner à laser, qui englobe l'émetteur (15) et le récepteur (17), et qui est réalisé pour émettre le rayonnement électromagnétique dans au moins deux plans (19a, 21a) et à l'intérieur des plans (19a, 21a), de l'émettre respectivement successivement dans des directions angulaires différentes, et les deux plans (19a, 21a) s'étendent en particulier de façon inclinée l'un par rapport à l'autre.

4. Dispositif selon l'une des revendications 1 à 3,
**caractérisé en ce que**, pour engendrer les deux plans (19a, 21a), le système (13) comprend une unité de déflexion déplaçable (25), qui comporte au moins deux surfaces (27, 22) pour dévier le rayonnement émis par l'émetteur (15), lesdites deux surfaces (27, 29) parvenant, du fait du déplacement de l'unité de déflexion (25), alternativement dans une position efficace par rapport à l'émetteur (15), et l'une des surfaces (27) engendre l'un des plans (21a) et l'autre surface (29) engendre l'autre plan (19a),
et l'unité de déflexion (25) comprend en particulier un miroir tournant avec deux surfaces de réflexion (27, 29) agencées de façon inclinée l'une par rapport à l'autre.

5. Dispositif selon l'une des revendications 1 à 4,
**caractérisé en ce que**, pour engendrer le plan de surveillance (21), le dispositif comprend un moyen de déflexion (31), en particulier un miroir tournant, déplaçable par rapport à l'émetteur (15), moyen qui est réalisé pour dévier le rayonnement émis par le système (13) dans un plan (21a) vers des directions différentes en dépendance de sa position.

6. Dispositif selon l'une des revendications 1 à 5,
**caractérisé en ce que** l'émetteur (15) est une partie constitutive d'une unité structurelle (13), en particulier d'un scanner, qui peut être montée séparément dans l'espace par rapport au moyen de déflexion déplaçable (31) et/ou au moyen de déflexion stationnaire (33).

7. Procédé pour la surveillance d'un local (11) au moyen d'un dispositif selon l'une des revendications 1 à 6,
dans lequel on engendre dans le local (11) au moyen du dispositif au moins un plan de protection (19), en particulier stationnaire, et au moins un plan de surveillance (21), qui se déplace par rapport au plan de protection (19) et qui palpe le local (11).

8. Procédé selon la revendication 7,
**caractérisé en ce que** l'on prend des mesures, en particulier **en ce que** l'on déclenche une alarme si, au moyen des éloignements mesurés dans le plan de protection (19) ou dans le plan de surveillance (21), on constate un écart vis-à-vis d'une situation de consigne prédéterminée.

9. Procédé selon la revendication 8,
**caractérisé en ce que** la situation de consigne est prédéterminée par référence au plan de protection (19) et/ou au plan de surveillance (21), en particulier exclusivement, par les dimensions du local (11) et par la position de montage du dispositif dans le local (11),
et la situation de consigne par référence au plan de surveillance (21) est en particulier prédéterminée par un ou plusieurs objets autorisés (35) dans le local.

10. Procédé selon l'une des revendications 7 à 9,
**caractérisé en ce que** l'on établit au moyen du dispositif une image du local (11), et cela
soit exclusivement à partir des éloignements mesurés dans le plan de surveillance (21) d'une part et à partir des dimensions du local (11) et de la position de montage du dispositif dans le local (11), lesquelles sont connues d'un moyen d'évaluation (23) du dispositif, d'autre part,
soit à partir des éloignements mesurés dans le plan de surveillance (21) d'une part et à partir d'informations sur la position respective du plan de surveillance (21) dans le local (11), qui sont mises additionnellement à disposition d'un moyen d'évaluation (23) du dispositif, d'autre part.

11. Procédé selon l'une des revendications 7 à 10,
**caractérisé en ce que** le plan de protection (19) est engendré de telle façon qu'une zone de montage (43) située à l'intérieur du local (11) pour au moins une partie du dispositif, en particulier pour le système (13) destiné à la mesure d'éloignement et pour un moyen de déflexion déplaçable (31), est séparée sans lacune vis-à-vis du reste du local (11) par une surface de protection (19, 19a) qui inclut au moins le plan de protection (19), et/ou **en ce que** le plan de surveillance (21) est engendré de telle façon qu'au moins le reste du local (11), séparé d'une zone de montage (43) par la surface de protection (19, 19a), est palpé sans lacune.

12. Utilisation d'un dispositif selon l'une des revendications 1 à 6 pour la surveillance d'un local de transfert ou de sas (11), situé en particulier dans un établissement financier, en particulier d'après un procédé selon l'une des revendications 7 à 11.

13. Utilisation selon la revendication 12,
**caractérisée en ce que** l'on utilise exactement un scanner à laser (13) agencé dans le local (11), qui engendre le plan de protection (19) et le plan de surveillance (21) au moyen d'exactement un émetteur (15), d'une unité de déflexion (25) mobile, comportant au moins deux surfaces (27, 29) pour dévier le rayonnement émis par l'émetteur (15), et d'au moins un moyen de déflexion (31, 33) agencé dans le local (11), dans laquelle, à chaque fois par référence aux dimensions du local (11), l'émetteur (15) et l'unité de déflexion (25) sont agencés proches l'un de l'autre, en particulier dans un boîtier commun, et le moyen de déflexion (31, 33) est agencé séparé dans l'espace vis-à-vis de l'émetteur (15) et de l'unité de déflexion (25), en particulier sur ou à proximité des côtés mutuellement opposés, de préférence des petits côtés, du local (11).

14. Utilisation selon la revendication 12 ou 13,
**caractérisée en ce que** le local (11) est accessible par deux côtés, en particulier mutuellement opposés, et sert à ce que des objets (35), qui ont été introduits dans le local (11) via un côté d'introduction, soient enlevés hors du local (11) via un côté d'enlèvement (39), et le dispositif est en outre amené à fonctionner de telle façon que, immédiatement avant une ouverture du côté d'enlèvement (39) le local (11) est surveillé au moyen du dispositif et l'on prend des mesures, en particulier on déclenche une alarme si, au moyen des éloignements mesurés dans le plan de protection (19) et/ou dans le plan de surveillance (21), on constate un écart vis-à-vis d'une situation de consigne prédéterminée.

15. Utilisation selon l'une des revendications 12 à 14,
**caractérisée en ce que** le dispositif est monté sur ou au voisinage du plafond (41) du local (11) et/ou l'une des parois latérales,
et/ou **en ce que** le local (11) est au moins approximativement en forme de parallélépipède, et en particulier **en ce que** le local (11) a des dimensions en longueur, en largeur et en hauteur respectivement inférieures à 10 m, de préférence inférieures à 5 m, et de façon particulièrement préférée inférieures à 3 m.
